# EUROPEAN PATENT APPLICATION

(11) **EP 4 560 768 A1**
(43) Date of publication of application: **28.05.2025**
(21) Application number: 23917174.7
(22) Date of filing: 14.11.2023
(51) Int. Cl.: H01M 10/0567, H01M 10/0569, H01M 10/0566, H01M 10/0564, H01M 10/056, H01M 10/05

(54) **ELECTROLYTE FOR SODIUM SECONDARY BATTERY, SODIUM SECONDARY BATTERY, AND ELECTRIC DEVICE**

(30) Priority: 16.01.2023 CN 202310070404
(71) Applicant: Contemporary Amperex Technology (Hong Kong) Limited, Hong Kong (HK)
(72) Inventor: LI, Xiaolong, Ningde, Fujian 352100 (CN); OUYANG, Chuying, Ningde, Fujian 352100 (CN); GUO, Bingkun, Ningde, Fujian 352100 (CN); ZHANG, Xinxin, Ningde, Fujian 352100 (CN); LIU, Ben, Ningde, Fujian 352100 (CN); CHEN, Shigang, Ningde, Fujian 352100 (CN); YAO, Shikang, Ningde, Fujian 352100 (CN); ZHOU, Qicheng, Ningde, Fujian 352100 (CN); LAN, Jiadian, Ningde, Fujian 352100 (CN)
(74) Representative: von Tietzen und Hennig, Nikolaus
(86) International application number: PCT/CN2023/131502
(87) International publication number: WO 2024/152706

(57) **Abstract**

This application provides a sodium secondary battery electrolyte, a sodium secondary battery, and an electric apparatus. The sodium secondary battery electrolyte is provided, and the electrolyte includes a diluent, where the diluent includes alkane with a general formula CₙH₂ₙ₊₂, where n is 8 to 13. The diluent can improve high-temperature cycling performance of a battery, reduce high-temperature gas production of the battery, and enhance electrochemical performance and safety performance of the battery at high temperature.

## Description

### CROSS-REFERENCE TO RELATED APPLICATIONS

This application claims the benefit of Chinese Patent Application No. 202310070404.7, filed on January 16, 2023 and entitled "SODIUM SECONDARY BATTERY ELECTROLYTE, SODIUM SECONDARY BATTERY, AND ELECTRIC APPARATUS", which is incorporated herein by reference in its entirety.

### TECHNICAL FIELD

This application relates to the technical field of sodium secondary batteries, and particularly, to a sodium secondary battery electrolyte, a sodium secondary battery, and an electric apparatus.

### BACKGROUND

With the development of battery technology, lithium secondary batteries dominate the portable electronics market and gradually extend to the application field of large-scale energy storage. However, existing lithium resources are unable to meet the urgent demand for establishing large-scale and high-energy density energy storage systems. Therefore, because of abundant sodium reserves, low costs, and similar electrochemical characteristics to lithium secondary batteries, sodium secondary batteries have emerged. However, currently widely studied sodium secondary batteries have poor high-temperature cycling performance and are accompanied by severe high-temperature gas production, greatly limiting further application of sodium secondary batteries.

### SUMMARY

This application is conducted in view of the above issues and aims to provide a sodium secondary battery electrolyte to improve high-temperature cycling performance of batteries, reduce high-temperature gas production of batteries, and enhance electrochemical performance and safety performance of sodium secondary batteries at high temperature.

A first aspect of this application provides a sodium secondary battery electrolyte. The electrolyte includes a diluent, where the diluent includes alkane with a general formula CₙH₂ₙ₊₂, where n is 8 to 13. With the alkane with the general formula CₙH₂ₙ₊₂ serving as the diluent, a protective layer can be formed on a periphery of a solvation structure, reducing direct contact between a solvent and positive and negative electrodes, reducing side reactions between the positive and negative electrodes and the solvent, improving high-temperature cycling performance of batteries, suppressing gas production during high-temperature cycling of sodium secondary batteries, and enhancing electrochemical performance and safety performance of batteries at high temperature.

In any embodiment, the diluent includes one or more of n-octane, n-nonane, n-decane, n-undecane, n-dodecane, n-tridecane, 2,3-dimethylheptane, 3-methylheptane, 4-methylheptane, and 3-ethylhexane, optionally one or two of n-nonane and n-decane.

In any embodiment, the electrolyte further includes a cosolvent, where the cosolvent includes a compound represented by structural formula I: 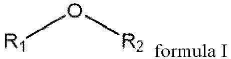 where R₁ is selected from C₃₋₉ alkyl, and R₂ is selected from halogen-substituted or unsubstituted C₁₋₃ alkyl.

The cosolvent can improve miscibility of the solvent and the diluent, helping the diluent to form a protective layer on the periphery of the solvation structure. In addition, the cosolvent can act as a bridge connecting the solvation structure and the diluent, forming on the periphery of the solvation structure the protective layer structure that has the cosolvent serve as an inner layer and the diluent serve as an outer layer, reducing side reactions between the positive and negative electrodes and the solvent. As a result, the battery has excellent room-temperature cycling performance and high-temperature cycling performance, and low high-temperature gas production.

In any embodiment, R₂ includes one or more of -CF₃, -CH₃, -CH₂-CF₃, -CH₂-CH₃, and -CF₂-CF₃, optionally one or two of -CF₂-CF₃ and -CF₃.

In any embodiment, the cosolvent includes one or more of methyl propyl ether, methyl butyl ether, methyl heptyl ether, ethyl propyl ether, 2-ethoxybutane, ethyl heptyl ether, ethyl pentyl ether, methyl octyl ether, propyl butyl ether, propyl nonyl ether, trifluoromethyl heptyl ether, 1,1,2,2,2-pentafluoroethyl propyl ether, and 2,2,2-trifluoroethyl butyl ether, optionally one or more of methyl butyl ether, methyl heptyl ether, ethyl propyl ether, ethyl heptyl ether, trifluoromethyl heptyl ether, and 1,1,2,2,2-pentafluoroethyl propyl ether.

In any embodiment, a molar ratio of the diluent to the cosolvent is 1:7 to 7:1, optionally 1:5 to 5:1.

The molar ratio of the diluent to the cosolvent falling within an appropriate range helps to form on the periphery of the solvation structure the protective layer structure that has the cosolvent serve as an inner layer and the diluent serve as an outer layer, thereby reducing side reactions between the positive and negative electrodes and the solvent. As a result, the battery has excellent room-temperature cycling performance and high-temperature cycling performance, and low gas production.

In any embodiment, the electrolyte includes a glycol ether solvent.

The glycol ether solvent gives the battery excellent room-temperature cycling performance and high-temperature cycling performance, and low high-temperature gas production.

In any embodiment, a molar ratio of the glycol ether solvent to the diluent is 1:5 to 3:1, optionally 1:3 to 1:1.

The molar ratio of the glycol ether solvent to the diluent falling within an appropriate range helps the diluent to form the protective layer on the periphery of the solvation structure, making the battery have excellent room-temperature cycling performance and high-temperature cycling performance, and low high-temperature gas production.

In any embodiment, the glycol ether solvent includes one or more of ethylene glycol dimethyl ether, diethylene glycol dimethyl ether, triethylene glycol dimethyl ether, tetraethylene glycol dimethyl ether, ethylene glycol diethyl ether, and ethylene glycol dibutyl ether.

In any embodiment, the electrolyte further includes a sodium salt, where the sodium salt includes at least one of a first sodium salt and a second sodium salt. The first sodium salt includes one or more of sodium hexafluorophosphate, sodium tetrafluoroborate, sodium hexafluoroarsenate, and sodium trifluoroacetate. The second sodium salt includes one or more of sodium difluorooxalate borate, sodium bis(oxalate)borate, sodium tetraphenylborate, sodium trifluoromethanesulfonate, sodium bis(fluorosulfonyl)imide, and sodium bis(trifluoromethanesulfonyl)imide.

An appropriate sodium salt gives the battery excellent room-temperature cycling performance and high-temperature cycling performance, and low high-temperature gas production.

In any embodiment, based on a total mass of the sodium salt, the glycol ether solvent, and the cosolvent, a mass percentage of the first sodium salt is 3% to 40%, optionally 5% to 30%.

The first sodium salt having an appropriate mass percentage allows the battery to have excellent room-temperature cycling performance and high-temperature cycling performance, and low high-temperature gas production.

In any embodiment, based on the total mass of the sodium salt, glycol ether, and cosolvent, a mass percentage of the second sodium salt is not less than 0.1%, optionally not less than 1%.

The second sodium salt having an appropriate mass percentage can improve the room-temperature cycling performance and high-temperature cycling performance of the battery and reduce high-temperature gas production of the battery.

A second aspect of this application provides a sodium secondary battery, where the sodium secondary battery includes the electrolyte in any embodiment.

In any embodiment, the sodium secondary battery includes a negative electrode plate, where the negative electrode plate includes a negative electrode current collector and a primer layer formed on at least one side of the negative electrode current collector.

The primer layer can improve the room-temperature cycling performance and high-temperature cycling performance of the battery, reduce high-temperature gas production of the battery, and enhance the electrochemical performance and safety performance of the battery.

In any embodiment, the primer layer has a surface density of 5-50 g/m².

The primer layer with a surface density of an appropriate range can optimize metal deposition effects, improve high-temperature cycling performance and room-temperature cycling performance of the battery, and reduce high-temperature gas production of the battery. In addition, the primer layer with a surface density of an appropriate range can increase the energy density of the battery, so that the usage requirements of the battery are met.

In any embodiment, the primer layer includes one or more of a carbon coating, an alloy coating, and a metal oxide coating, optionally a carbon coating.

In any embodiment, the primer layer includes one or more of super conductive carbon black, Ketjen black, acetylene black, carbon nanotubes, and graphene.

In any embodiment, the sodium secondary battery is a sodium metal battery with no negative electrode.

The sodium secondary battery as a sodium metal battery with no negative electrode can improve the room-temperature cycling performance and high-temperature cycling performance of the battery, reduce high-temperature gas production of the battery, and enhance the electrochemical performance and safety performance of the battery.

A third aspect of this application provides a battery module including the sodium secondary battery of the second aspect.

A fourth aspect of this application provides a battery pack including the sodium secondary battery of the second aspect or the battery module of the third aspect.

A fifth aspect of this application provides an electric apparatus including at least one of the sodium secondary battery of the second aspect, the battery module of the third aspect, or the battery pack of the fourth aspect.

### BRIEF DESCRIPTION OF DRAWINGS

FIG. 1 is a schematic diagram of a sodium secondary battery according to an embodiment of this application;
FIG. 2 is an exploded view of the sodium secondary battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a sodium secondary battery as a power source according to an embodiment of this application.

### Reference signs:

1. battery pack; 2. upper box body; 3. lower box body; 4. battery module; 5. sodium secondary battery; 51. housing; 52. electrode assembly; and 53. cover plate.

### DESCRIPTION OF EMBODIMENTS

The following specifically discloses in detail embodiments of the sodium secondary battery, battery module, battery pack, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

When a sodium secondary battery is used or stored at high temperature, reactivity between positive and negative electrodes and an electrolyte increases, significantly increasing side reactions in a cycling process of the battery, and producing a large amount of gas. This causes the battery to easily undergo volumetric swelling, and in severe cases, may lead to internal short circuits of the battery, seriously affecting the electrochemical performance and safety performance of the battery.

### [Sodium secondary battery electrolyte]

This application provides a sodium secondary battery electrolyte, where the electrolyte includes a diluent. The diluent includes alkane with a general formula CₙH₂ₙ₊₂, where n is 8 to 13.

In this specification, the term "sodium secondary battery" refers to a secondary battery that uses sodium ions as charge carriers. A negative electrode active material of the sodium secondary battery includes a carbon-based material, a titanium-based material, an alloy material, layered transition metal oxide, layered transition metal selenide, an organic material, or sodium metal, where a sodium secondary battery that uses sodium metal as a negative electrode active material is referred to as a sodium metal battery.

In some embodiments, the negative electrode active material of the sodium secondary battery includes one or more of a graphite carbon material, an amorphous carbon material, and a nano-carbon material.

In some embodiments, the negative electrode active material for the sodium secondary battery is hard carbon.

In some embodiments, the negative electrode active material for the sodium secondary battery is sodium metal.

In this specification, the term "sodium metal battery with no negative electrode" refers to a sodium metal battery that uses a current collector as a negative electrode in an assembly process, where sodium ions are deposited onto the current collector in a charging process to form a sodium metal negative electrode.

In this specification, the term "electrolyte" refers to a carrier for ion transport in a sodium secondary battery, including a liquid electrolyte, a solid electrolyte, or a quasi-solid electrolyte.

In this specification, the term "diluent" refers to a component in which an electrolytic salt is insoluble or poorly soluble, where there is no significant coordination or association between a diluent molecule and a cation of the electrolytic salt, and the diluent does not disrupt a solvation structure.

Solvation structure: Due to the stronger binding effect of a solvent molecule on a cation than an anion, after a sodium salt is dissolved in a solvent, the solvent gathers around sodium ions. An aggregate of the sodium ions and the solvent is called a solvation structure.

In this specification, the term "alkane" refers to a linear saturated hydrocarbon whose molecules have carbon atoms connected in a form of single bond, and have the remaining valence bonds combined with hydrogen atoms to form a compound.

Alkane with the general formula CₙH₂ₙ₊₂ has low solubility in a sodium salt. Alkane does not directly participate in a solvation structure of sodium ions and does not affect film-forming on surfaces of positive and negative electrodes in a sodium secondary battery. However, alkane can form a protective layer on a periphery of the solvation structure, reducing direct contact between a solvent and the positive and negative electrodes, lowering side reactions between the positive and negative electrodes and the solvent, improving high-temperature cycling performance of the battery, and suppressing gas production during high-temperature cycling of the sodium secondary battery. Additionally, adding an alkane diluent can reduce the viscosity of the electrolyte without disrupting the solvation structure, thereby increasing the ionic conductivity of the electrolyte and improving the electrochemical performance of the battery.

A sodium metal battery is used as an example. Alkane is very stable with sodium metal and alkane does not undergo chemical reactions with a sodium metal negative electrode. Using alkane to form a protective layer on a periphery of a solvation structure reduces direct contact between the solvent and positive and negative electrodes. The peripheral alkane does not react with the positive and negative electrodes either, reducing side reactions between the positive and negative electrodes and the solvent, improving the electrochemical performance and safety performance of the battery at high temperature.

In summary, the alkane diluent with the general formula CₙH₂ₙ₊₂ can improve the high-temperature cycling performance of the battery, reduce high-temperature gas production of the battery, and enhance the electrochemical performance and safety performance of the battery at high temperature.

In some embodiments, the diluent includes one or more of alkane with a general formula C₈H₁₈, C₉H₂₀, C₁₀H₂₂, C₁₁H₂₄, C₁₂H₂₆, and C₁₃H₂₈.

In some embodiments, the diluent includes one or more of n-octane and its isomer, n-nonane and its isomer, n-decane and its isomer, n-undecane and its isomer, n-dodecane and its isomer, and n-tridecane and its isomer.

In this specification, the term "isomer" refers to compounds with the same molecular formula but different structures. For example, the isomer of n-octane includes but is not limited to 2-methylheptane, 3-methylheptane, 4-methylheptane, 3-ethylhexane, 2,2-dimethylhexane, 2,2-dimethylhexane, 2-methyl-3-ethylpentane, 2,2,3-trimethylpentane, and 2,2,3,3-tetramethylbutane.

In some embodiments, the diluent includes one or more of n-octane, n-nonane, n-decane, n-undecane, n-dodecane, n-tridecane, 2,3-dimethylheptane, 3-methylheptane, 4-methylheptane, and 3-ethylhexane.

In some embodiments, the diluent includes one or two of n-nonane and n-decane.

A suitable diluent makes the protective layer structure on the periphery of the solvation structure more stable, and allows the electrolyte to have suitable viscosity and excellent ionic conductivity, further improving room-temperature cycling performance and high-temperature cycling performance of the battery and reducing high-temperature gas production of the battery.

In some embodiments, the electrolyte further includes a cosolvent, where the cosolvent includes a compound represented by structural formula I: 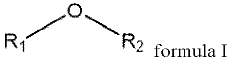 where R₁ is selected from C₃₋₉ alkyl, and R₂ is selected from halogen-substituted or unsubstituted C₁₋₃ alkyl.

In this specification, the term "C₃₋₉ alkyl" refers to a straight-chain or branched hydrocarbon group composed of only carbon and hydrogen atoms, with no unsaturation of the group, having three to nine carbon atoms attached to the rest of the molecule through a single bond.

In this specification, the term "C₁₋₃ alkyl" refers to a straight-chain or branched hydrocarbon group composed of only carbon and hydrogen atoms, with no unsaturation of the group, having one to three carbon atoms attached to the rest of the molecule through a single bond.

In this specification, the term "halogen-substituted" refers to at least one hydrogen atom of a compound or chemical part being replaced by a halogen atom or halogen alkyl.

In this specification, the term "halogen alkyl" refers to alkyl containing at least one halogen atom.

In this specification, the term "halogen" refers to fluorine, chlorine, bromine, or iodine.

A glycol ether solvent is used as an example. R₁ is long-chain alkyl that can be miscible with an alkane diluent, and R₂ forms an alkoxy group with an oxygen atom and can be miscible with a solvent. The cosolvent can improve miscibility of the solvent and the diluent, helping the diluent to form a protective layer on the periphery of the solvation structure. In addition, the cosolvent can act as a bridge connecting the solvation structure and the diluent, forming on the periphery of the solvation structure the protective layer structure that has the cosolvent serve as an inner layer and the diluent serve as an outer layer, reducing side reactions between the positive and negative electrodes and the solvent. As a result, the battery has excellent room-temperature cycling performance and high-temperature cycling performance, and low high-temperature gas production.

In some embodiments, R₂ includes one or more of -CF₃, -CH₃, -CH₂-CF₃, -CH₂-CH₃, and -CF₂-CF₃.

In some embodiments, R₂ includes one or two of -CF₂-CF₃ and -CF₃.

In some embodiments, R₂ includes -CF₂-CF₃.

In some embodiments, the cosolvent includes one or more of methyl propyl ether, methyl butyl ether, methyl heptyl ether, ethyl propyl ether, 2-ethoxybutane, ethyl heptyl ether, ethyl pentyl ether, methyl octyl ether, propyl butyl ether, propyl nonyl ether, trifluoromethyl heptyl ether, 1,1,2,2,2-pentafluoroethyl propyl ether, and 2,2,2-trifluoroethyl butyl ether.

In some embodiments, the cosolvent includes one or more of methyl butyl ether, methyl heptyl ether, ethyl propyl ether, ethyl heptyl ether, trifluoromethyl heptyl ether, and 1,1,2,2,2-pentafluoroethyl propyl ether.

In some embodiments, a molar ratio of the diluent to the cosolvent is 1:7 to 7:1. In some embodiments, a molar ratio of the diluent to the cosolvent is optionally any one of 1:7 to 1 :6, 1:7 to 1:5, 1:7 to 1:5, 1:7 to 1:4, 1:7 to 1:3, 1:7 to 1:2, 1:7 to 1:1, 1:7 to 2:1, 1:7 to 3:1, 1:7 to 4:1, 1:7 to 5:1, 1:7 to 6:1, 1:7 to 7:1, 1:6 to 1:5, 1:6 to 1:4, 1:6 to 1:3, 1:6 to 1:2, 1:6 to 1:1, 1:6 to 2:1, 1:6 to 3:1, 1:6 to 4:1, 1:6 to 5:1, 1:6 to 6:1, 1:6 to 7:1, 1:5 to 1:4, 1:5 to 1:3, 1:5 to 1:2, 1:5 to 1:1, 1:5 to 2:1, 1:5 to 3:1, 1:5 to 4:1, 1:5 to 5:1, 1:5 to 6:1, 1:5 to 7:1, 1:4 to 1:3, 1:4 to 1:2, 1:4 to 1:1, 1:4 to 2:1, 1:4 to 3:1, 1:4 to 4:1, 1:4 to 5:1, 1:4 to 6:1, 1:4 to 7:1, 1:3 to 1:2, 1:3 to 1:1, 1:3 to 2:1, 1:3 to 3:1, 1:3 to 4:1, 1:3 to 5:1, 1:3 to 6:1, 1:3 to 7:1, 1:2 to 1:1, 1:2 to 2:1, 1:2 to 3:1, 1:2 to 4:1, 1:2 to 5:1, 1:2 to 6:1, 1:2 to 7:1, 1:1 to 2:1, 1:1 to 3:1, 1:1 to 4:1, 1:1 to 5:1, 1:1 to 6:1, 1:1 to 7:1, 2:1 to 3:1, 2:1 to 4:1, 2:1 to 5:1, 2:1 to 6:1, 2:1 to 7:1, 3:1 to 4:1, 3:1 to 5:1, 3:1 to 6:1, 3:1 to 7:1, 4:1 to 5:1, 4:1 to 6:1, 4:1 to 7:1, 5:1 to 6:1, 5:1 to 7:1, and 6:1 to 7:1.

The molar ratio of the diluent to the cosolvent falling within an appropriate range helps the diluent to form a protective structure on an outer layer of a solvation structure, reducing side reactions between positive and negative electrodes and a solvent, so that the battery has excellent room-temperature cycling performance and high-temperature cycling performance, and low gas production.

In some embodiments, a molar ratio of the diluent to the cosolvent is 1:5 to 5:1. In some embodiments, a molar ratio of the diluent to the cosolvent is optionally any one of 1:5 to 1:4, 1:5 to 1:3, 1:5 to 1:2, 1:5 to 1:1, 1:5 to 2:1, 1:5 to 3:1, 1:5 to 4:1, 1:5 to 5:1, 1:4 to 1:3, 1:4 to 1:2, 1:4 to 1:1, 1:4 to 2:1, 1:4 to 3:1, 1:4 to 4:1, 1:4 to 5:1, 1:3 to 1:2, 1:3 to 1:1, 1:3 to 2:1, 1:3 to 3:1, 1:3 to 4:1, 1:3 to 5:1, 1:2 to 1:1, 1:2 to 2:1, 1:2 to 3:1, 1:2 to 4:1, 1:2 to 5:1, 1:1 to 2:1, 1:1 to 3:1, 1:1 to 4:1, 1:1 to 5:1, 2:1 to 3:1, 2:1 to 4:1, 2:1 to 5:1, 3:1 to 4:1, 3:1 to 5:1, and 4:1 to 5:1.

The molar ratio of the diluent to the cosolvent falling within an appropriate range helps form a protective structure on the outer layer of the solvation structure, reducing side reactions between the positive and negative electrodes and the solvent, further improving room-temperature cycling performance and high-temperature cycling performance of the battery and reducing high-temperature gas production of the battery.

In some embodiments, the electrolyte includes a glycol ether solvent.

In some embodiments, the glycol ether solvent includes one or more of ethylene glycol dimethyl ether, diethylene glycol dimethyl ether, triethylene glycol dimethyl ether, tetraethylene glycol dimethyl ether, ethylene glycol diethyl ether, and ethylene glycol dibutyl ether.

In this specification, the term "glycol ether" refers to a compound with the structure shown in formula II: 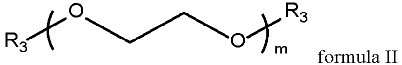 where m is 1 to 4 and R₃ is selected from C₁₋₆ alkyl.

In this specification, the term "C₁₋₆ alkyl" refers to a straight-chain or branched hydrocarbon group composed of only carbon and hydrogen atoms, with no unsaturation of the group, having one to six carbon atoms attached to the rest of the molecule through a single bond.

The molecules of the glycol ether solvent can construct a stable electrode/electrolyte interphase on the surface of the negative electrode, forming a stable SEI, reducing electrochemical polarization, and making the battery have excellent room-temperature cycling performance and high-temperature cycling performance, and low high-temperature gas production.

In some embodiments, a molar ratio of the glycol ether solvent to the diluent is 1:5 to 3:1. In some embodiments, a molar ratio of the glycol ether solvent to the diluent is any one of 1:5 to 1:4, 1:5 to 1:3, 1:5 to 1:2, 1:5 to 1:1, 1:5 to 2:1, 1:5 to 3:1, 1:4 to 1:3, 1:4 to 1:2, 1:4 to 1:1, 1:4 to 2:1, 1:4 to 3:1, 1:3 to 1:2, 1:3 to 1:1, 1:3 to 2:1, 1:3 to 3:1, 1:2 to 1:1, 1:2 to 2:1, 1:2 to 3:1, 1:1 to 2:1, 1:1 to 3:1, and 2:1 to 3:1.

The molar ratio of the glycol ether solvent to the diluent falling within an appropriate range helps the diluent to form the protective layer on the periphery of the solvation structure, making the battery have excellent room-temperature cycling performance and high-temperature cycling performance, and low high-temperature gas production.

In some embodiments, a molar ratio of the glycol ether solvent to the diluent is 1:3 to 1:1. In some embodiments, the molar ratio of the glycol ether solvent to the diluent is any one of 1:3 to 1:2, 1:3 to 1:1, and 1:2 to 1:1.

The molar ratio of the glycol ether solvent to the diluent falling within an appropriate range helps the diluent form a protective layer on the periphery of the solvation structure, further improving room-temperature cycling performance and high-temperature cycling performance of the battery and reducing high-temperature gas production of the battery.

In some embodiments, the electrolyte further includes a sodium salt, where the sodium salt includes at least one of a first sodium salt and a second sodium salt.

In some embodiments, the sodium salt includes a first sodium salt and a second sodium salt.

In some embodiments, the first sodium salt includes one or more of sodium hexafluorophosphate, sodium tetrafluoroborate, sodium hexafluoroarsenate, and sodium trifluoroacetate.

An anion in the first sodium salt has a weaker binding force with a sodium ion, which is conducive to achieving rapid deposition and stripping of sodium metal and improving the kinetic performance of the battery. Especially in a sodium metal battery with no negative electrode, the first sodium salt can effectively ensure the cycling performance of the battery. In addition, an appropriate sodium salt gives the electrolyte suitable viscosity and excellent ionic conductivity, so that the battery has excellent room-temperature cycling performance and high-temperature cycling performance, and low high-temperature gas production.

In some embodiments, the second sodium salt includes one or more of sodium difluorooxalate borate, sodium bis(oxalate)borate, sodium tetraphenylborate, sodium trifluoromethanesulfonate, sodium bis(fluorosulfonyl)imide, and sodium bis(trifluoromethanesulfonyl)imide.

The second sodium salt includes a sulfur-containing organic sodium salt or a boron-containing organic sodium salt, so that it easily participates in formation of a structurally stable and evenly distributed SEI, so as to improve high-temperature cycling performance of the battery and reduce high-temperature gas production of the battery. In addition, a suitable sodium salt gives the electrolyte suitable viscosity and excellent ionic conductivity, so that the battery has excellent room-temperature cycling performance and high-temperature cycling performance, and low high-temperature gas production.

In some embodiments, based on a total mass of the sodium salt, glycol ether solvent, and cosolvent, a mass percentage of the first sodium salt is 3% to 40%. In some embodiments, based on the total mass of the sodium salt, glycol ether solvent, and cosolvent, the mass percentage of the first sodium salt is optionally any one of 3% to 5%, 3% to 10%, 3% to 15%, 3% to 20%, 3% to 25%, 3% to 30%, 3% to 35%, 3% to 40%, 5% to 10%, 5% to 15%, 5% to 20%, 5% to 25%, 5% to 30%, 5% to 35%, 5% to 40%, 10% to 15%, 10% to 20%, 10% to 25%, 10% to 30%, 10% to 35%, 10% to 40%, 15% to 20%, 15% to 25%, 15% to 30%, 15% to 35%, 15% to 40%, 20% to 25%, 20% to 30%, 20% to 35%, 20% to 40%, 25% to 30%, 25% to 35%, 25% to 40%, 30% to 35%, 30% to 40%, and 35% to 40%.

The mass percentage of the first sodium salt falling within an appropriate range gives the electrolyte suitable viscosity and excellent ionic conductivity, resulting in a battery with excellent room-temperature cycling performance and high-temperature cycling performance, and low high-temperature gas production, and broadening the operating temperature of the battery.

In some embodiments, based on the total mass of the sodium salt, glycol ether solvent, and cosolvent, the mass percentage of the first sodium salt is 5% to 30%. In some embodiments, based on the total mass of the sodium salt, glycol ether solvent, and cosolvent, the mass percentage of the first sodium salt is optionally any one of 5% to 10%, 5% to 15%, 5% to 20%, 5% to 25%, 5% to 30%, 10% to 15%, 10% to 20%, 10% to 25%, 10% to 30%, 15% to 20%, 15% to 25%, 15% to 30%, 20% to 25%, 20% to 30%, and 25% to 30%.

The mass percentage of the first sodium salt falling within an appropriate range gives the electrolyte suitable viscosity and excellent ionic conductivity, which can improve the room-temperature cycling performance and high-temperature cycling performance of the battery and enhance the electrochemical performance of the battery.

In some embodiments, based on the total mass of the sodium salt, glycol ether, and cosolvent, a mass percentage of the second sodium salt is not less than 0.1%. In some embodiments, based on the total mass of the sodium salt, glycol ether, and cosolvent, a mass percentage of the second sodium salt is not less than any one of 0.2%, 0.3%, 0.4%, 0.5%, 1%, 2%, 3%, 4%, 5%, 6%, 7%, 8%, 9%, 10%, 15%, 20%, 25%, 30%, 35%, and 40%.

The mass percentage of the second sodium salt falling within an appropriate range gives the electrolyte suitable viscosity and excellent ionic conductivity, which can improve the room-temperature cycling performance and high-temperature cycling performance of the battery, and reduce the high-temperature gas production of the battery.

In some embodiments, based on the total mass of the sodium salt, glycol ether, and cosolvent, a mass percentage of the second sodium salt is not less than 1%. In some embodiments, based on the total mass of the sodium salt, glycol ether, and cosolvent, the mass percentage of the second sodium salt is not less than any one of 1%, 2%, 3%, 4%, 5%, 6%, 7%, 8%, 9%, 10%, 15%, 20%, 25%, 30%, 35%, and 40%.

The mass percentage of the second sodium salt falling within an appropriate range gives the electrolyte suitable viscosity and excellent ionic conductivity, which can further improve the room-temperature cycling performance and high-temperature cycling performance of the battery, and reduce the high-temperature gas production of the battery.

In some embodiments, the electrolyte optionally further includes an additional additive that can improve certain performance of the battery, such as an additive that improves the overcharge performance of the battery and an additive that improves the thermal stability of the electrolyte solution.

### [Sodium secondary battery]

This application provides a sodium secondary battery, where the sodium secondary battery includes the electrolyte in any embodiment.

In some embodiments, the sodium secondary battery includes a negative electrode plate, where the negative electrode plate includes a negative electrode current collector and a primer layer formed on at least one side of the negative electrode current collector.

In this specification, the term "primer layer on at least one side of the negative electrode current collector" refers to a primer layer applied on one side or two sides of the current collector. The primer layer can be in direct contact with the current collector, meaning that there are no other structures between the current collector and the primer layer. Alternatively, the primer layer can be not in direct contact with the current collector, meaning that there are other structures between the current collector and the primer layer.

The primer layer has the characteristic of a low metal nucleation potential, which can effectively improve deposition/dissolution performance of metal, and in addition, can mitigate the significant volumetric changes caused by the metal deposition/dissolution process, stabilize the cell structure, improve the room-temperature cycling performance and high-temperature cycling performance of the battery, reduce high-temperature gas production of the battery, and enhance the electrochemical performance and safety performance of the battery.

In some embodiments, the primer layer has a surface density of 5-50 g/m².

In some embodiments, the surface density of the primer layer can optionally be any one of 5-10 g/m², 5-20 g/m², 5-30 g/m², 5-40 g/m², 5-50 g/m², 10-20 g/m², 10-30 g/m², 10-40 g/m², 10-50 g/m², 20-30 g/m², 20-40 g/m², 20-50 g/m², 30-40 g/m², 30-50 g/m², and 40-50 g/m².

The primer layer with a surface density of an appropriate range can optimize metal deposition effects, improve high-temperature cycling performance and room-temperature cycling performance of the battery, and reduce high-temperature gas production of the battery. In addition, the primer layer with a surface density of an appropriate range can increase the energy density of the battery, so that the usage requirements of the battery are met.

In any embodiment, the primer layer includes one or more of a carbon coating, an alloy coating, and a metal oxide coating, optionally a carbon coating.

In any embodiment, the primer layer includes one or more of super conductive carbon black, Ketjen black, acetylene black, carbon nanotubes, and graphene.

In some embodiments, the primer layer includes a binder, where the binder includes any one of polyvinylidene fluoride, sodium carboxymethyl cellulose, styrene-butadiene rubber, sodium alginate, lithium/sodium polyacrylate, polytetrafluoroethylene, polyimide, and polyurethane.

In some embodiments, the primer layer is a metal coating, where the metal has a body-centered cubic structure and the metal includes any one of α-Fe, V, Nb, Cr, Mo, Ta, and W.

In some embodiments, the primer layer is an alloy coating, where the alloy includes an alloy made of one or more metal of Au, Ag, Sn, and Sb.

In some embodiments, the primer layer is a metal oxide coating, where the oxide includes at least one of copper oxide and aluminum oxide.

In some embodiments, the primer layer is a conductive polymer coating, where the conductive polymer includes any one of polyaniline, polythiophene, polypyrrole, and polyphenylene.

In some embodiments, the primer layer is a conductive ceramic coating, and a conductive ceramic material includes at least one of TiB₂, TiC, and B₄C₃.

In some embodiments, the primer layer is a conductive carbon coating, where the conductive carbon includes at least one of conductive carbon black, graphite, carbon fiber, single-walled carbon nanotubes, multi-walled carbon nanotubes, graphene, and fullerene.

In some embodiments, the sodium secondary battery is a sodium metal battery with no negative electrode.

In some embodiments, the sodium secondary battery is a sodium metal battery with no negative electrode. The sodium metal battery with no negative electrode does not use a negative electrode active material, but uses only a negative electrode current collector as a negative electrode. The negative electrode is plated with sodium in the first charging process, and then sodium returns to a positive electrode during discharge to complete a charge-discharge cycle. Since there is no negative electrode material and only the negative electrode current collector is used, the sodium metal battery with no negative electrode can effectively overcome the defects of sodium metal batteries and obtain a higher energy density than sodium metal negative electrodes.

The sodium secondary battery as a sodium metal battery with no negative electrode can improve the room-temperature cycling performance and high-temperature cycling performance of the battery, reduce high-temperature gas production of the battery, and enhance the electrochemical performance and safety performance of the battery at high temperature.

In some embodiments, a CB value of the sodium metal battery with no negative electrode is less than or equal to 0.1.

The CB value is a unit area capacity of the negative electrode plate divided by a unit area capacity of the positive electrode plate in the sodium secondary battery. Since there is no negative electrode active material in the sodium metal battery with no negative electrode, the unit area capacity of the negative electrode plate is relatively small, and the CB value of the secondary battery is less than or equal to 0.1.

In some embodiments, the negative electrode current collector used for the negative electrode plate includes at least one of a metal foil current collector, a metal foam current collector, a metal mesh current collector, a carbon felt current collector, a carbon cloth current collector, and a carbon paper current collector. Sodium ions do not form an alloy with aluminum. Considering cost reduction and weight reduction, the sodium secondary battery preferentially uses an aluminum current collector, where the aluminum current collector is any one of aluminum foil, aluminum alloy foil, and an aluminum composite current collector. The aluminum composite current collector includes a polymer base film and aluminum foil and/or aluminum alloy foil formed on two sides of the polymer base film. Specifically, the aluminum base composite current collector has a "sandwich" structure with the polymer base film in the middle, and the aluminum foil on two sides, aluminum alloy foil on two sides, or aluminum foil on one side of the polymer base film and aluminum alloy foil on the other side. The polymer base film is any one of polyamide, poly(ethylene terephthalate), polyimide, polyethylene, polypropylene, polystyrene, polyvinyl chloride, acrylonitrile-butadiene-styrene copolymer, poly(butylene terephthalate), poly(p-phenylene terephthalamide), poly(propylene glycol), polyoxymethylene, epoxy resin, phenolic resin, polytetrafluoroethylene, polyvinylidene fluoride, silicone rubber, and polycarbonate.

### [Positive electrode plate]

In some embodiments, the positive electrode plate includes a positive current collector and a positive electrode active material layer formed on at least part of the surface of the positive current collector. The positive electrode active material layer includes a positive electrode active material, which may include at least one of layered transition metal oxide, a polyanion compound, and a Prussian blue compound.

Transition metal in the layered transition metal oxide may be at least one of Mn, Fe, Ni, Co, Cr, Cu, Ti, Zn, V, Zr, and Ce. Optionally, the layered transition metal oxide is, for example, NaxMO₂, where M is one or several of Ti, V, Mn, Co, Ni, Fe, Cr, and Cu, and 0 < x ≤ 1.

The polyanion compound can be a class of compounds having metal ions, transition metal ions, and tetrahedral-type (YO₄)ⁿ⁻ anion units. The metal ion is optionally one of a sodium ion, a lithium ion, a potassium ion, and a zinc ion. The transition metal is optionally at least one of Mn, Fe, Ni, Co, Cr, Cu, Ti, Zn, V, Zr, and Ce. Y is optionally at least one of P, S, and Si, and n represents the valence state of (YO₄)ⁿ⁻.

The Prussian blue compound can be a compound having a sodium ion, a transition metal ion, and a cyanide ion (CN⁻). The transition metal may be at least one of Mn, Fe, Ni, Co, Cr, Cu, Ti, Zn, V, Zr, and Ce. The Prussian blue compound is, for example, NaaMebMe'c(CN)₆, where Me and Me' are each independently at least one of Ni, Cu, Fe, Mn, Co, and Zn, 0<a≤2, 0<b<1, and 0<c<1.

The positive electrode active material layer may further include a conductive agent to improve the conductivity of the positive electrode. The conductive agent is optionally one or several of Super P, acetylene black, carbon black, Ketjen black, carbon dot, carbon nanotube, graphite, graphene, and carbon nanofiber.

The positive electrode active material layer may further include a binder to firmly bind a positive electrode active substance and an optional conductive agent on the positive electrode current collector. The binder is optionally at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

The positive electrode current collector can be a conductive carbon sheet, a metal foil, a carbon-coated metal foil, a porous metal plate, or a composite current collector. The conductive carbon material of the conductive carbon sheet is optionally one or several of Super P, carbon black, Ketjen black, carbon dots, carbon nanotubes, graphite, graphene and carbon nanofibers. The metal materials of the metal foil, carbon-coated metal foil and porous metal plate are each independently selected from at least one of copper, aluminum, nickel and stainless steel. The composite current collector can be a composite current collector formed by combining a metal foil and a polymer base film.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Separator]

In some embodiments, the sodium secondary battery further includes a separator. The separator is not limited to any particular type in this application, and may be any well-known porous separator with good chemical stability and mechanical stability.

In some embodiments, the material of the separator can be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the sodium secondary battery may include an outer package. The outer package may be used for packaging the electrode assembly and the electrolyte solution.

In some embodiments, the outer package of the sodium secondary battery may be a hard shell, for example, a hard plastic shell, an aluminum shell, or a steel shell. The outer package of the sodium secondary battery may alternatively be a soft pack, for example, a soft pouch. A material of the soft pack may be plastic. As the plastic, polypropylene, polybutylene terephthalate, polybutylene succinate, and the like may be listed.

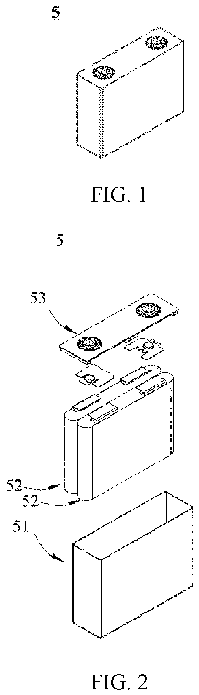

This application does not impose any special limitations on a shape of the sodium secondary battery, and the secondary battery may be cylindrical, rectangular, or of any other shapes. For example, FIG. 1 shows a sodium secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The sodium secondary battery 5 may include one or more electrode assemblies 52, and persons skilled in the art may make choices according to actual requirements.

In some embodiments, the sodium secondary battery may be assembled into a battery module, and the battery module may include one or more sodium secondary batteries. The specific quantity may be chosen by persons skilled in the art according to use and capacity of the battery module.

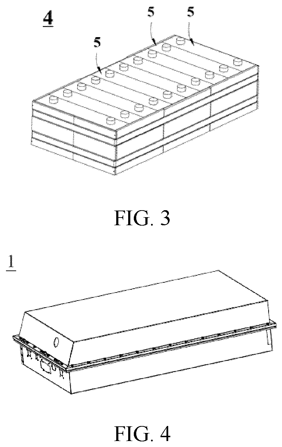

FIG. 3 shows a battery module 4 as an example. As shown in FIG. 3, in the battery module 4, a plurality of sodium secondary batteries 5 may be sequentially arranged along a length direction of the battery module 4. Certainly, the batteries may alternatively be arranged in any other manners. Further, the plurality of sodium secondary batteries 5 may be fastened by using fasteners.

Optionally, the battery module 4 may further include a shell with accommodating space, and the plurality of sodium secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

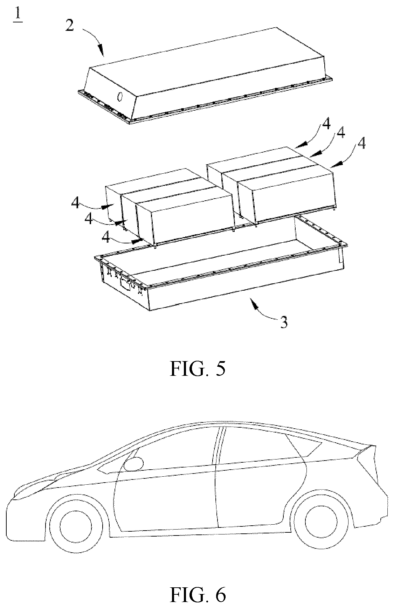

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the sodium secondary battery, the battery module, or the battery pack provided in this application. The sodium secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The sodium secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the sodium secondary battery, a battery pack or a battery module may be used.

In another example, the apparatus may be a mobile phone, a tablet computer, a notebook computer, or the like. Such apparatus is generally required to be light and thin and may use a sodium secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. In the following examples, only the case where the secondary battery is a sodium-ion battery is shown, but this application is not limited thereto.

### I. Preparation method

### Example 1

### (1) Preparation of electrolyte

In an argon atmosphere glove box with a water percentage of less than 10 ppm, a first sodium salt sodium hexafluorophosphate and a second sodium salt sodium bis(fluorosulfonyl)imide were added to a solvent ethylene glycol dimethyl ether to obtain a mixed solution. Then a diluent n-nonane and a cosolvent methyl butyl ether were added to the mixed solution to obtain an electrolyte, where a molar ratio of n-nonane to methyl butyl ether was 1:1, a molar ratio of ethylene glycol dimethyl ether to n-nonane was 1:2, and based on a total mass of the first sodium salt, the second sodium salt, ethylene glycol dimethyl ether, and methyl butyl ether, a mass percentage of sodium hexafluorophosphate was 15%, and a mass percentage of sodium bis(fluorosulfonyl)imide was 3%.

### (2) Preparation of positive electrode plate

A positive electrode active material Na₃V₂(PO₄)₃, a binder polyvinylidene fluoride (PVDF), and a conductive agent conductive carbon black (Super-P) were mixed to uniformity at a mass ratio of 96%:2%:2% in a solvent N-methylpyrrolidone (NMP) to prepare a positive electrode slurry. The slurry was applied on a surface of aluminum foil by using an extrusion coater according to the requirement of mass per unit area of positive electrode active material, and dried. Finally, a cold press machine was used to cold press the coated electrode plate to a design density of 2.5 g/cm³ to obtain a final positive electrode plate.

### (3) Preparation of negative electrode plate

Carbon nanotubes and sodium alginate were added to deionized water and stirred to form a uniform slurry. The slurry was applied on a negative electrode current collector and dried. The collector was cut to obtain a negative electrode plate with no negative electrode structure, where a surface density of the primer layer was 20 g/m².

### (4) Separator

A polyethylene film (PE separator) was used as a separator.

### (5) Preparation of battery

The positive electrode plate, the separator, and the negative electrode plate were stacked in sequence so that the separator was sandwiched between the positive electrode plate and the negative electrode plate for separation, and the electrolyte was added, to assemble a button cell.

### Examples 2 to 38

Except for differences in electrolyte formulation and/or negative electrode plate preparation parameters, steps of Examples 2 to 38 were the same as those in Example 1. The preparation methods of the negative electrode plates of Examples 37 and 38 were as follows. Specific parameters are shown in Tables 1 and 2.

Example 37: Carbon nanotubes and sodium alginate were added to deionized water and stirred to form a uniform slurry. The slurry was coated onto a negative electrode current collector aluminum foil and dried, then the collector was cut to obtain a negative electrode current collector with a primer layer, where a surface density of the primer layer was 20 g/m². The negative electrode active material hard carbon, a conductive agent acetylene black, a binder styrene-butadiene rubber (SBCs), and a thickener carboxymethyl cellulose (CMC) were mixed at a weight ratio of 90:5:4:1 in an appropriate amount of deionized water and stirred thoroughly to form a uniform negative electrode slurry. The negative electrode slurry was applied onto the negative electrode current collector with the primer layer, and dried at 100°C, and then pressed to obtain a negative electrode plate.

Example 38: The negative electrode plate was an aluminum foil.

### Comparative Examples 1 to 6

Except for differences in electrolyte formulation and/or negative electrode plate preparation parameters, the preparation method of the negative electrode plate in Comparative Example 5 was the same as that in Example 37, and the preparation method of the negative electrode plate in Comparative Example 6 was the same as that in Example 38. Specific parameters are shown in Table 1 and Table 2.

### II. Battery performance test

### (1) Room-temperature cycling performance

At 25°C and normal pressure (0.1 MPa), the battery was charged at a constant current of 0.5C rate to a voltage of 3.5 V, then discharged at a constant current of 1C rate to a voltage of 3.2 V. This was one charge-discharge cycle. A capacity of the first discharge cycle was 100%. The charge-discharge cycle was repeated 500 times before the test stopped. A cycling capacity retention rate was recorded. A room-temperature capacity retention rate was used as an indicator to evaluate the room-temperature cycling performance of the battery.

### (2) High-temperature cycling performance

At 60°C and normal pressure (0.1 MPa), the battery was charged at a constant current of 0.5C rate to a voltage of 3.5 V, then discharged at a constant current of 1C rate to a voltage of 3.2 V. This was one charge-discharge cycle. A capacity of the first discharge cycle was 100%. The charge-discharge cycle was repeated 500 times before the test stopped. A cycling capacity retention rate was recorded. A high-temperature capacity retention rate was used as an indicator to evaluate the high-temperature cycling performance of the battery.

### (3) Gas production performance at high temperature

At room temperature (25°C), the battery was charged at a constant current of 0.5C rate to 3.5 V. After the battery was fully charged, the water displacement method was used to test the initial volume of the battery. The battery was placed in an oven at 60°C for 24 days, and then the battery was taken out. The battery was left standing at room temperature for 60 minutes. Within 60 minutes after it was cooled to room temperature, the volume of the battery was tested using the water displacement method. The battery volume tested before storage was used as the baseline to calculate a volume swelling rate of the battery. The volume swelling rate of the battery after storage for 24 days at 60°C (%)=(battery volume measured after storage/battery volume measured before storage)-1.

The test processes of the comparative examples and other examples were the same as above.

### III. Test results

The test results of the above examples and comparative examples are shown in Tables 1 and 2.

**Table 1 Preparation parameters of examples and comparative examples**

| No. | First sodium salt | | Second sodium salt | | Diluent | Cosolvent | Molar ratio of diluent to cosolvent |
|---|---|---|---|---|---|---|---|
| | Name | Mass percentage | Name | Mass percentage | Name | Name | |
| Example 1 | NaPF₆ | 15% | NaFSI | 3% | N-nonane | Methyl butyl ether | 1:1 |
| Example 2 | NaPF₆ | 15% | NaFSI | 3% | N-decadecane | Methyl butyl ether | 1:1 |
| Example 3 | NaPF₆ | 15% | NaFSI | 3% | N-octane | Methyl butyl ether | 1:1 |
| Example 4 | NaPF₆ | 15% | NaFSI | 3% | N-tridecane | Methyl butyl ether | 1:1 |
| Example 5 | NaPF₆ | 15% | NaFSI | 3% | 2,3-dimethylheptane | Methyl butyl ether | 1:1 |
| Example 6 | NaPF₆ | 15% | NaFSI | 3% | N-nonane | Methyl heptyl ether | 1:1 |
| Example 7 | NaPF₆ | 15% | NaFSI | 3% | N-nonane | Ethyl propyl ether | 1:1 |
| Example 8 | NaPF₆ | 15% | NaFSI | 3% | N-nonane | Ethyl heptyl ether | 1:1 |
| Example 9 | NaPF₆ | 15% | NaFSI | 3% | N-nonane | Methyl butyl ether | 1:7 |
| Example 10 | NaPF₆ | 15% | NaFSI | 3% | N-nonane | Methyl butyl ether | 1:5 |
| Example 11 | NaPF₆ | 15% | NaFSI | 3% | N-nonane | Methyl butyl ether | 5:1 |
| Example 12 | NaPF₆ | 15% | NaFSI | 3% | N-nonane | Methyl butyl ether | 7:1 |
| Example 13 | NaPF₆ | 15% | NaFSI | 3% | N-nonane | Methyl butyl ether | 1:1 |
| Example 14 | NaPF₆ | 15% | NaFSI | 3% | N-nonane | Methyl butyl ether | 1:1 |
| Example 15 | NaPF₆ | 15% | NaFSI | 3% | N-nonane | Methyl butyl ether | 1:1 |
| Example 16 | NaPF₆ | 15% | NaFSI | 3% | N-nonane | Methyl butyl ether | 1:1 |
| Example 17 | NaPF₆ | 15% | NaFSI | 3% | N-nonane | Methyl butyl ether | 1:1 |
| Example 18 | NaPF₆ | 15% | NaFSI | 3% | N-nonane | Methyl butyl ether | 1:1 |
| Example 19 | NaPF₆ | 15% | NaFSI | 3% | N-nonane | Methyl butyl ether | 1:1 |
| Example 20 | NaBF₄ | 15% | NaFSI | 3% | N-nonane | Methyl butyl ether | 1:1 |
| Example 21 | CF₃COONa | 15% | NaFSI | 3% | N-nonane | Methyl butyl ether | 1:1 |
| Example 22 | NaPF₆ | 15% | / | / | N-nonane | Methyl butyl ether | 1:1 |
| Example 23 | NaPF₆ | 3% | NaFSI | 3% | N-nonane | Methyl butyl ether | 1:1 |
| Example 24 | NaPF₆ | 5% | NaFSI | 3% | N-nonane | Methyl butyl ether | 1:1 |
| Example 25 | NaPF₆ | 30% | NaFSI | 3% | N-nonane | Methyl butyl ether | 1:1 |
| Example 26 | NaPF₆ | 40% | NaFSI | 3% | N-nonane | Methyl butyl ether | 1:1 |
| Example 27 | / | / | NaFSI | 3% | N-nonane | Methyl butyl ether | 1:1 |
| Example 28 | NaPF₆ | 15% | NaBOB | 3% | N-nonane | Methyl butyl ether | 1:1 |
| Example 29 | NaPF₆ | 15% | NaTFSI | 3% | N-nonane | Methyl butyl ether | 1:1 |
| Example 30 | NaPF₆ | 15% | NaFSI | 0.05% | N-nonane | Methyl butyl ether | 1:1 |
| Example 31 | NaPF₆ | 15% | NaFSI | 0.1% | N-nonane | Methyl butyl ether | 1:1 |
| Example 32 | NaPF₆ | 15% | NaFSI | 1% | N-nonane | Methyl butyl ether | 1:1 |
| Example 33 | NaPF₆ | 15% | NaFSI | 3% | N-nonane | Methyl butyl ether | 1:1 |
| Example 34 | NaPF₆ | 15% | NaFSI | 3% | N-nonane | Methyl butyl ether | 1:1 |
| Example 35 | NaPF₆ | 15% | NaFSI | 3% | N-nonane | Methyl butyl ether | 1:1 |
| Example 36 | NaPF₆ | 15% | NaFSI | 3% | N-nonane | Methyl butyl ether | 1:1 |
| Example 37 | NaPF₆ | 15% | NaFSI | 3% | N-nonane | Methyl butyl ether | 1:1 |
| Example 38 | NaPF₆ | 15% | NaFSI | 3% | N-nonane | Methyl butyl ether | 1:1 |
| Comparative Example 1 | NaPF₆ | 15% | NaFSI | 3% | / | Methyl butyl ether | / |
| Comparative Example 2 | NaPF₆ | 15% | NaFSI | 3% | / | / | / |
| Comparative Example 3 | NaPF₆ | 15% | / | / | / | Methyl butyl ether | / |
| Comparative Example 4 | / | / | NaFSI | 3% | / | Methyl butyl ether | / |
| Comparative Example 5 | NaPF₆ | 15% | NaFSI | 3% | / | Methyl butyl ether | / |
| Comparative Example 6 | NaPF₆ | 15% | NaFSI | 3% | / | Methyl butyl ether | / |

**Table 2 Preparation parameters and test results of examples and comparative examples**

| No. | Ethylene glycol ether solvent | Molar ratio of ethylene glycol ether solvent to diluent | Surface density of primer layer (g/m²) | Battery performance | | |
|---|---|---|---|---|---|---|
| | Name | | | Room-temperature cycling capacity retention rate | High-temperature cycling capacity retention rate | High-temperature storage thickness swelling rate |
| Example 1 | Ethylene glycol dimethyl ether | 1:2 | 20 | 90.06% | 85.32% | 0.20% |
| Example 2 | Ethylene glycol dimethyl ether | 1:2 | 20 | 88.56% | 83.61% | 0.33% |
| Example 3 | Ethylene glycol dimethyl ether | 1:2 | 20 | 87.14% | 82.96% | 0.39% |
| Example 4 | Ethylene glycol dimethyl ether | 1:2 | 20 | 87.25% | 83.01% | 0.36% |
| Example 5 | Ethylene glycol dimethyl ether | 1:2 | 20 | 88.19% | 83.15% | 0.35% |
| Example 6 | Ethylene glycol dimethyl ether | 1:2 | 20 | 89.22% | 84.22% | 0.27% |
| Example 7 | Ethylene glycol dimethyl ether | 1:2 | 20 | 88.35% | 83.69% | 0.36% |
| Example 8 | Ethylene glycol dimethyl ether | 1:2 | 20 | 89.69% | 84.67% | 0.26% |
| Example 9 | Ethylene glycol dimethyl ether | 1:2 | 20 | 76.26% | 70.96% | 1.21% |
| Example 10 | Ethylene glycol dimethyl ether | 1:2 | 20 | 83.29% | 78.59% | 0.86% |
| Example 11 | Ethylene glycol dimethyl ether | 1:2 | 20 | 84.51% | 77.68% | 0.72% |
| Example 12 | Ethylene glycol dimethyl ether | 1:2 | 20 | 78.20% | 70.12% | 1.36% |
| Example 13 | Ethylene glycol dimethyl ether | 1:5 | 20 | 76.09% | 68.14% | 0.96% |
| Example 14 | Ethylene glycol dimethyl ether | 1:3 | 20 | 84.21% | 76.14% | 0.75% |
| Example 15 | Ethylene glycol dimethyl ether | 1:1 | 20 | 85.29% | 77.01% | 0.65% |
| Example 16 | Ethylene glycol dimethyl ether | 3:1 | 20 | 75.46% | 69.21% | 1.20% |
| Example 17 | Tetraethylene glycol dimethyl ether | 1:2 | 20 | 88.36% | 82.06% | 0.36% |
| Example 18 | Ethylene glycol diethyl ether | 1:2 | 20 | 89.09% | 82.91% | 0.27% |
| Example 19 | Diethylene glycol dimethyl ether | 1:2 | 20 | 89.46% | 83.09% | 0.31% |
| Example 20 | Ethylene glycol dimethyl ether | 1:2 | 20 | 87.64% | 81.03% | 0.36% |
| Example 21 | Ethylene glycol dimethyl ether | 1:2 | 20 | 86.53% | 79.87% | 0.42% |
| Example 22 | Ethylene glycol dimethyl ether | 1:2 | 20 | 80.21% | 65.74% | 1.68% |
| Example 23 | Ethylene glycol dimethyl ether | 1:2 | 20 | 78.65% | 68.42% | 1.02% |
| Example 24 | Ethylene glycol dimethyl ether | 1:2 | 20 | 82.46% | 74.06% | 0.67% |
| Example 25 | Ethylene glycol dimethyl ether | 1:2 | 20 | 83.06% | 77.19% | 0.70% |
| Example 26 | Ethylene glycol dimethyl ether | 1:2 | 20 | 76.41% | 71.16% | 0.56% |
| Example 27 | Ethylene glycol dimethyl ether | 1:2 | 20 | 0% | 0% | 0.96% |
| Example 28 | Ethylene glycol dimethyl ether | 1:2 | 20 | 87.46% | 81.46% | 0.47% |
| Example 29 | Ethylene glycol dimethyl ether | 1:2 | 20 | 86.21% | 79.05% | 0.52% |
| Example 30 | Ethylene glycol dimethyl ether | 1:2 | 20 | 74.59% | 65.42% | 1.32% |
| Example 31 | Ethylene glycol dimethyl ether | 1:2 | 20 | 80.16% | 72.19% | 0.86% |
| Example 32 | Ethylene glycol dimethyl ether | 1:2 | 20 | 88.14% | 82.53% | 0.42% |
| Example 33 | Ethylene glycol dimethyl ether | 1:2 | 5 | 86.49% | 78.29% | 0.32% |
| Example 34 | Ethylene glycol dimethyl ether | 1:2 | 50 | 87.02% | 78.64% | 0.41% |
| Example 35 | Ethylene glycol dimethyl ether | 1:2 | 2 | 78.01% | 70.16% | 0.56% |
| Example 36 | Ethylene glycol dimethyl ether | 1:2 | 60 | 76.39% | 68.19% | 0.61% |
| Example 37 | Ethylene glycol dimethyl ether | 1:2 | 20+negative electrode active layer made of hard carbon | 86.14% | 80.13% | 0.32% |
| Example 38 | Ethylene glycol dimethyl ether | 1:2 | / | 74.13% | 66.43% | 0.68% |
| Comparative Example 1 | Ethylene glycol dimethyl ether | / | 20 | 90.15% | 56.13% | 3.16% |
| Comparative Example 2 | Ethylene glycol dimethyl ether | / | 20 | 92.46% | 58.18% | 3.09% |
| Comparative Example 3 | Ethylene glycol dimethyl ether | / | 20 | 90.77% | 56.18% | 4.26% |
| Comparative Example 4 | Ethylene glycol dimethyl ether | / | 20 | 0% | 0% | 3.49% |
| Comparative Example 5 | Ethylene glycol dimethyl ether | / | 20+negative electrode active layer made of hard carbon | 88.14% | 54.23% | 3.49% |
| Comparative Example 6 | Ethylene glycol dimethyl ether | / | / | 80.16% | 51.23% | 3.79% |

It can be learned from the above results that the sodium secondary battery electrolytes in Examples 1 to 38 all contain a diluent, and the diluent includes n-nonane, n-decane, n-octane, n-tridecane, or 2,3-dimethylheptane. It can be learned from comparison of Examples 1 to 21, 23 to 26, and 28 to 36 with Comparative Examples 1 and 2, Example 22 with Comparative Example 3, Example 27 with Comparative Example 4, and Examples 37 and 38 with Comparative Examples 5 and 6 that the diluent can improve the high-temperature capacity retention rate of the battery, enhance the high-temperature cycling performance of the battery, reduce the high-temperature swelling rate of the battery, reduce the high-temperature gas production of the battery, and improve the electrochemical performance and safety performance of the battery at high temperature.

It can be learned from comparison of Examples 1 and 2 with Examples 3 to 5 that the diluent containing n-nonane or n-decane can further improve the room-temperature cycling performance and high-temperature cycling performance of the battery and reduce high-temperature gas production of the battery.

The sodium secondary battery electrolytes in Examples 1 to 38 all contain a cosolvent, and the cosolvent is methyl butyl ether, methyl heptyl ether, ethyl propyl ether, or ethyl heptyl ether. The battery has excellent room-temperature cycling performance and high-temperature cycling performance, and low high-temperature gas production.

In Examples 1 to 38, the molar ratio of the diluent to the cosolvent is 1:7 to 7:1. The battery has excellent room-temperature cycling performance and high-temperature cycling performance, and low high-temperature gas production.

It can be learned from comparison of Examples 1, 10 and 11 with Examples 9 and 12 that the molar ratio of the diluent to the cosolvent of 1:5 to 5:1 can further improve the room-temperature cycling performance and high-temperature cycling performance of the battery and reduce high-temperature gas production of the battery.

The sodium secondary electrolytes in Examples 1 to 38 all contain a glycol ether solvent, and the diluent is ethylene glycol dimethyl ether, tetraethylene glycol dimethyl ether, ethylene glycol diethyl ether, or diethylene glycol dimethyl ether. The battery has excellent room-temperature cycling performance and high-temperature cycling performance, and low high-temperature gas production.

In Examples 1 to 38, the molar ratio of the glycol ether solvent to the diluent is 1:5 to 3:1. The battery has excellent room-temperature cycling performance and high-temperature cycling performance, and low high-temperature gas production.

It can be learned from comparison of Examples 1, 14 and 15 with Examples 13 and 16 that the molar ratio of the glycol ether solvent to the diluent being 1:3 to 1:1 can further improve the room-temperature cycling performance and high-temperature cycling performance of the battery and reduce high-temperature gas production of the battery.

The electrolytes in Examples 1 to 38 further contain a sodium salt, where the sodium salt includes one or two of the first sodium salt and the second sodium salt. The first sodium salt includes sodium hexafluorophosphate (NaPF₆), sodium tetrafluoroborate (NaBF₄), or sodium trifluoroacetate (CF₃COONa). The second sodium salt includes sodium bis(fluorosulfonyl)imide (NaFSI), sodium bis(trifluoromethanesulfonyl)imide (NaTFSI), or sodium bis(oxalate)borate (NaBOB). The battery has excellent room-temperature cycling performance and high-temperature cycling performance, and low high-temperature gas production.

In Examples 1 to 26, and 28 to 38, the mass percentage of the first sodium salt is 3% to 40% based on the total mass of the sodium salt, the glycol ether solvent, and the cosolvent. The battery has excellent room-temperature cycling performance and high-temperature cycling performance, and low high-temperature gas production.

It can be learned from comparison of Examples 1, 24 and 25 with Examples 23 and 26 that the mass percentage of the first sodium salt being 5% to 30% based on the total mass of the sodium salt, glycol ether solvent, and cosolvent can further improve the room-temperature cycling performance and high-temperature cycling performance of the battery and enhance the electrochemical performance of the battery.

It can be learned from comparison of Examples 1, 31 and 32 with Example 30 that the mass percentage of the second sodium salt being not less than 0.1% based on the total mass of the sodium salt, glycol ether solvent, and cosolvent can improve the room-temperature cycling performance and high-temperature cycling performance of the battery and reduce high-temperature gas production of the battery.

It can be learned from comparison of Examples 1 and 32 with Examples 30 and 31 that the mass percentage of the second sodium salt being not less than 1% based on the total mass of the sodium salt, glycol ether solvent, and cosolvent can further improve the room-temperature cycling performance and high-temperature cycling performance of the battery and reduce high-temperature gas production of the battery.

It can be learned from comparison of Examples 1 and 37 with Example 38 that the negative electrode plate includes the negative electrode current collector and the primer layer formed on at least one side of the negative electrode current collector. This can improve the room-temperature cycling performance and high-temperature cycling performance of the battery, reduce high-temperature gas production of the battery, and enhance the electrochemical performance and safety performance of the battery.

It can be learned from comparison of Examples 1, 33 and 34 with Examples 35 and 36 that the primer layer with a surface density of 5-50 g/m² can improve the room-temperature cycling performance and high-temperature cycling performance of the battery, reduce high-temperature gas production of the battery, and enhance the electrochemical performance and safety performance of the battery.

It can be learned from comparison of Example 1 with Example 37 that the sodium secondary battery as a sodium metal battery with no negative electrode can improve the room-temperature cycling performance and high-temperature cycling performance of the battery, reduce high-temperature gas production of the battery, and enhance the electrochemical performance and safety performance of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A sodium secondary battery electrolyte, **characterized in that** the electrolyte comprises a diluent, wherein the diluent comprises alkane with a general formula CₙH₂ₙ₊₂, wherein n is 8 to 13.

2. The electrolyte according to claim 1, **characterized in that** the diluent comprises one or more of n-octane, n-nonane, n-decane, n-undecane, n-dodecane, n-tridecane, 2,3-dimethylheptane, 3-methylheptane, 4-methylheptane, and 3-ethylhexane, optionally one or two of n-nonane and n-decane.

3. The electrolyte according to claim 1 or 2, **characterized in that** the electrolyte further comprises a cosolvent, wherein the cosolvent comprises a compound represented by structural formula I: 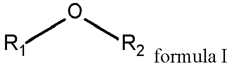 wherein R₁ is selected from C₃₋₉ alkyl, and R₂ is selected from halogen-substituted or unsubstituted C₁₋₃ alkyl.

4. The electrolyte according to claim 3, **characterized in that** R₂ comprises one or more of -CF₃, -CH₃, - CH₂-CF₃, -CH₂-CH₃, and -CF₂-CF₃, optionally one or two of -CF₂-CF₃ and -CF₃.

5. The electrolyte according to claim 3 or 4, **characterized in that** the cosolvent comprises one or more of methyl propyl ether, methyl butyl ether, methyl heptyl ether, ethyl propyl ether, 2-ethoxybutane, ethyl heptyl ether, ethyl pentyl ether, methyl octyl ether, propyl butyl ether, propyl nonyl ether, trifluoromethyl heptyl ether, 1,1,2,2,2-pentafluoroethyl propyl ether, and 2,2,2-trifluoroethyl butyl ether, optionally one or more of methyl butyl ether, methyl heptyl ether, ethyl propyl ether, ethyl heptyl ether, trifluoromethyl heptyl ether, and 1,1,2,2,2-pentafluoroethyl propyl ether.

6. The electrolyte according to any one of claims 3 to 5, **characterized in that** a molar ratio of the diluent to the cosolvent is 1:7 to 7:1, optionally 1:5 to 5:1.

7. The electrolyte according to any one of claims 1 to 6, **characterized in that** the electrolyte comprises a glycol ether solvent.

8. The electrolyte according to claim 7, **characterized in that** a molar ratio of the glycol ether solvent to the diluent is 1:5 to 3:1, optionally 1:3 to 1:1.

9. The electrolyte according to claim 7 or 8, **characterized in that** the glycol ether solvent comprises one or more of ethylene glycol dimethyl ether, diethylene glycol dimethyl ether, triethylene glycol dimethyl ether, tetraethylene glycol dimethyl ether, ethylene glycol diethyl ether, and ethylene glycol dibutyl ether.

10. The electrolyte according to any one of claims 1 to 9, **characterized in that** the electrolyte further comprises a sodium salt, wherein the sodium salt comprises one or two of a first sodium salt and a second sodium salt, the first sodium salt comprises one or more of sodium hexafluorophosphate, sodium tetrafluoroborate, sodium hexafluoroarsenate, and sodium trifluoroacetate, and the second sodium salt comprises one or more of sodium difluorooxalate borate, sodium bis(oxalate)borate, sodium tetraphenylborate, sodium trifluoromethanesulfonate, sodium bis(fluorosulfonyl)imide, and sodium bis(trifluoromethanesulfonyl)imide.

11. The electrolyte according to claim 10, **characterized in that** based on a total mass of the sodium salt, the glycol ether solvent, and the cosolvent, a mass percentage of the first sodium salt is 3% to 40%, optionally 5% to 30%.

12. The electrolyte according to claim 10 or 11, **characterized in that** based on the total mass of the sodium salt, glycol ether, and cosolvent, a mass percentage of the second sodium salt is not less than 0.1%, optionally not less than 1%.

13. A sodium secondary battery, **characterized in that** the sodium secondary battery comprises the electrolyte according to any one of claims 1 to 12.

14. The sodium secondary battery according to claim 13, **characterized in that** the secondary battery comprises a negative electrode plate, wherein the negative electrode plate comprises a negative electrode current collector and a primer layer formed on at least one side of the negative electrode current collector.

15. The sodium secondary battery according to claim 14, **characterized in that** the primer layer has a surface density of 5-50 g/m².

16. The sodium secondary battery according to claim 14 or 15, **characterized in that** the primer layer comprises one or more of a carbon coating, an alloy coating, and a metal oxide coating, optionally a carbon coating.

17. The sodium secondary battery according to any one of claims 14 to 16, **characterized in that** the primer layer comprises one or more of super conductive carbon black, Ketjen black, acetylene black, carbon nanotubes, and graphene.

18. The sodium secondary battery according to any one of claims 13 to 17, **characterized in that** the sodium secondary battery is a sodium metal battery with no negative electrode

19. An electric apparatus, **characterized by** comprising the sodium secondary battery according to any one of claims 13 to 18.
